# EUROPÄISCHE PATENTSCHRIFT

(11) **EP 3 669 991 B1**
(45) Veröffentlichungstag und Bekanntmachung des Hinweises auf die Patenterteilung: **26.07.2023**
(21) Anmeldenummer: 19211313.2
(22) Anmeldetag: 25.11.2019
(51) Int. Cl.: B03B 9/06, B07C 5/34, B09B 5/00, G01N 21/64, H01J 9/52, B07C 5/342, C09K 11/01

(54) **VERFAHREN ZUM RECYCLING VON LED-KOMPONENTEN AUS ALTLAMPENMISCHUNGEN**
METHOD FOR RECYCLING OF LED-COMPONENTS FROM A MIXTURE OF USED LAMPS
PROCÉDÉ POUR LE RECYCLAGE DES COMPOSANTS DE DEL D'UN MÉLANGE DES LAMPES USAGÉES

(30) Priorität: 18.12.2018 DE 102018222185
(43) Veröffentlichungstag der Anmeldung: 24.06.2020
(73) Patentinhaber: Fraunhofer-Gesellschaft zur Förderung der angewandten Forschung e.V., 80686 München (DE)
(72) Erfinder: Zimmermann, Jörg, 97082 Würzburg (DE); Gassmann, Andrea, 97082 Würzburg (DE)
(74) Vertreter: Pfenning, Meinig & Partner mbB

(56) Entgegenhaltungen:
- DE-A1- 4 401 351

## Beschreibung

Die vorliegende Erfindung betrifft ein Verfahren zum Recycling von LED-Komponenten aus Altlampenmischungen, bei dem in einer Altlampenmischung die LED-Lampen mittels eines Detektors lokalisiert und anschließend von der restlichen Altlampenmischung getrennt werden. Im Anschluss erfolgt eine mechanische Zerkleinerung der LED-Lampen mit folgender Detektion und Trennung der LED-Komponenten von den Nicht-LED-Komponenten. Verwendung findet das Verfahren insbesondere zur Abtrennung von Leuchtdioden und/oder Leuchtstofflampen aus einer Altlampenmischung.

Die DE 44 01 351 A1 betrifft ein Verfahren zur Identifizierung lumineszierender Substanzen in Gefäßen, insbesondere in Entladungslampen.

Das werkstoffliche Recycling von Altlampen gewinnt in den letzten Jahren eine immer größere Bedeutung. So werden in der Sammelgruppe 4 Altlampen derzeit LED-Lampen und Gasentladungslampen, in kompakter Bauweise als Energiesparlampen bekannt, gleichermaßen gesammelt. Gasentladungslampen enthalten Quecksilber, während LED-Lampen frei von diesem sind. Gasentladungslampen und LED-Lampen müssen für eine effiziente Verwertung unterschiedlichen Verfahren unterzogen werden. Bisher existiert kein Verfahren zur automatisierten Separierung, da ein hierfür benötigtes Erkennungsverfahren fehlt.

Im Rahmen des 7th Framework Programme der EU wurde das Projekt ILLUMI-NATE (Automated Sorting and Recycling of Waste Lamps) durchgeführt. In diesem Projekt wurde unter anderem ein Multisensor-System zur Erkennung und Trennung unterschiedlicher Lampenarten zu trennen, mit dem die Erkennung von Lampengewichte, -formen und -farben ermöglicht wird. (http://cordis.europa.eu/result/rcn/202758_en.html). Allerdings ist das Multisensor-System komplex und bedarf der Kenntnis der im Abfall zu findenden bzw. zu erwartenden Produkte.

Weitere Lösungen für die Lampensortierung mit dem Hintergrund der LED-Lampen-Erkennung existieren bislang nicht. Darüber hinaus würde in einem Recyclingverfahren für LEDs der Schritt der Separierung der LED-Chips (oder LED-Packages) anfallen, für das es bislang ebenfalls keine geeignete Sensorik gibt.

Ausgehend hiervon war es Aufgabe der vorliegenden Erfindung ein Verfahren bereitzustellen, die es auf einfach handhabbare Weise ermöglicht, eine effiziente Auftrennung von Altlampenmischungen zu erreichen.

Diese Aufgabe wird durch das Verfahren mit den Merkmalen des Anspruchs 1 gelöst. Die weiteren abhängigen Ansprüche zeigen vorteilhafte Weiterbildungen auf.

Erfindungsgemäß wird ein Verfahren zum Recycling von LED-Komponenten aus Altlampenmischungen bereitgestellt, bei dem
a) eine Altlampenmischung einer Bestrahlungskammer zugeführt wird,
b) die Altlampenmischung mit einer im Wellenlängenbereich von 400 bis 500 nm emittierenden Strahlungsquelle bestrahlt wird, wobei die durch die Bestrahlung zur Fluoreszenz angeregten LED-Lampen Fluoreszenzstrahlung emittieren,
c) die emittierte Fluoreszenzstrahlung mit einem Detektor detektiert wird und so die LED-Lampen identifiziert werden,
d) die identifizierten LED-Lampen von der restlichen Altlampenmischung getrennt werden,
e) die LED-Lampen einer mechanischen Zerkleinerung in LED-Komponenten und Nicht-LED-Komponeten unterzogen werden,
f) die LED-Komponenten mit einer im Wellenlängenbereich von 400 bis 500 nm emittierenden Strahlungsquelle bestrahlt wird, wobei die durch die Bestrahlung zur Fluoreszenz angeregten LED-Komponenten Fluoreszenzstrahlung emittieren,
g) die emittierte Fluoreszenzstrahlung mit einem Detektor detektiert wird und so die LED-Komponenten identifiziert werden und
h) die identifizierten LED-Lampen von den Nicht-LED-Komponenten getrennt werden.

Die genannten Altlampenmischungen enthalten in der Regel bei ordnungsgemäßer Sammlung nach dem ElektroG Gasentladungslampen und LED-Lampen. Gasentladungslampen gibt es verschiedenen Formen. Unterschieden wird bei den Gasentladungslampen zwischen Sonderbauformen und stabförmigen Lampen. Äquivalent dazu gibt es auch bei den LED-Lampen Sonderbaubauformen und stabförmige Lampen. Bei unsachgemäßer Sammlung können sich in der Altlampensammlung neben LED-Lampen und Gasentladungslampen auch Fehlwürfe wie Glühlampen und Halogenlampen in den Altlampenmischungen befinden.

Mit dem erfindungsgemäßen Verfahren können LED-Lampen erkannt und von der Altlampenmischung getrennt werden. Dadurch kann die beim Recycling-Unternehmen meist als Mischgebinde aus Gasentladungslampen und LED-Lampen eingehende Altlampenmischung vorab separiert werden, sodass im Anschluss beide Lampenarten einem eigenen angepassten und optimierten Recyclingverfahren zugeführt werden können. Die LED-Lampen werden erfindungsgemäß nach einer mechanischen Zerkleinerung in LED-Komponenten und andere Komponenten, die frei von LED's sind (Nicht-LED-Komponenten) mittels Fluoresezenzstrahlung detektiert und so identifiziert und anschließend voneinander getrennt. So kann eine Fraktion aus LED-Komponenten, z.B. LED-Chips aus der Altlampenmischung separiert werden.

Der überwiegende Teil der LED-Lampen aus dem Bereich Beleuchtung basiert auf einer blauen LED in Kombination mit einer Leuchtstoffschicht. Diese Leuchtstoffschicht lässt sich mit blauem Licht anregen, was zu einer Lumineszenz im grünen, gelben, und/oder roten Spektralbereich führt. Dadurch lassen sich diese Leuchtstoffe und damit die LED-Chips/Lampen identifizieren. Dieser Effekt kann zur Erkennung und Separierung von LED-Lampen aus der Altlampenmischung verwendet werden. Die gleiche Methode eignet sich demzufolge auch für die Erkennung der separaten LED-Komponenten, bspw. nach der Zerkleinerung der Lampen im Recyclingprozess zur Auftrennung in die einzelnen Komponenten.

Leuchtstoffe, die in Entladungslampen verwendet werden, lassen sich dagegen bis auf wenige Ausnahmen nur mit UV oder höherenergetischer Strahlung anregen.

Das erfindungsgemäße Verfahren bringt die folgenden Vorteile mit sich:
- eine Zeit- und Personal-Einsparung bei der Vorsortierung von Altlampen,
- mehr Sicherheit vor Fehlwürfen, insbesondere quecksilberhaltige Lampen in der Quecksilberfreien Fraktion,
- erstmalige Möglichkeit, automatisiert LED-Chips in Gemisch mit anderen Fraktionen des zerkleinerten Lampen- oder Elektroschrotts zu erkennen.

Die Trennung der identifizierten LED-Lampen von der restlichen Altlampenmischung erfolgt vorzugsweise mittels Falltüren, Auswurfklappen, Trennweichen, Ausblasdüsen oder Kombinationen hiervon. Es sind aber grundsätzliche beliebige Trennvorrichtungen einsetzbar. Die Trennung der identifizierten LED-Komponenten von den Nicht-LEED-Komponenten nach der Zerkleinerung der LED-Lampen erfolgt vorzugsweise mittels Ausblasdüsen. Es sind aber grundsätzliche beliebige Trennvorrichtungen einsetzbar.

Vorzugsweise erfolgt die mechanische Zerkleinerung in Schritt e) durch einen Schredder, eine Hammermühle, eine Prallmühle, elektrohydraulische Zerkleinerung oder Kombinationen hiervon.

Als Strahlungsquelle wird bevorzugt eine LED-Lampe, ein LED-Cluster oder ein Laser mit einer Streuoptik. Ebenso ist es möglich blaue oder weiße Lichtquellen in Kombination mit einem im Bereich 400 nm - 500 nm transparenten Filter oder Filterkombination einzusetzen. Es können aber grundsätzlich alle Strahlungsquellen, die Licht in einem eng begrenzten Wellenlängenbereich zwischen 400 nm und 500 nm emittieren, verwendet werden. Hierbei können auch mehrere Strahlungsquellen eingesetzt werden, wobei beliebige Kombinationen der zuvor genannten Strahlungsquellen möglich sind. Ebenso ist es bevorzugt mehrere Strahlungsquellen einzusetzen, die unterschiedliche Wellenlängenbereiche abdecken.

Als Detektoren werden vorzugsweise Photomultiplier, Photodioden, CCD-Sensoren, Luxmeter oder Kombinationen eingesetzt. Werden mehrere Detektoren eingesetzt, ist es auch möglich, diese an unterschiedlichen Positionen in der Bestrahlungskammer anzuordnen.

Eine bevorzugte Variante des Verfahrens sieht vor, dass die Altlampenmischung zur verbesserten Detektion über Trennwände in kleine Fraktionen aufgeteilt wird und diese Fraktionen jeweils einzeln durch die Messkammer transportiert werden. Hierdurch lässt sich eine verbesserte, d.h. genauere Detektion realisieren.

Die Bestrahlungskammer weist vorzugsweise mehrere Strahlungsquellen, insbesondere Strahlungsquellen an allen Seiten der Bestrahlungskammer auf. Alternativ ist es bevorzugt, dass die Bestrahlungskammer mindestens ein reflektives Element zur homogenen Bestrahlung der Altlampenmischung aufweist.

Zur Vermeidung der direkten Detektion der von der Strahlungsquelle emittierten Strahlung ist der Detektor vorzugsweise mit einem optischen Filter, insbesondere ein Kantenfilter, geschützt.

Es wird ebenso eine Vorrichtung zum Recycling von LED-Komponenten aus einer Altlampenmischung bereitgestellt, die eine Bestrahlungskammer mit mindestens einer Licht im Wellenlängenbereich von 400 bis 500 nm emittierenden Strahlungsquelle, mindestens einen Detektor zur Messung der Beleuchtungsstärke des von der Strahlungsquelle emittierten Lichts sowie mindestens eine Trennvorrichtung aufweist.

Die mindestens eine Strahlungsquelle ist vorzugsweise ausgewählt aus der Gruppe bestehend aus LED-Lampen, LED-Cluster, Laser mit einer Streuoptik, blaue oder weiße Lichtquellen in Kombination mit einem im Bereich 400 nm - 500 nm transparenten Filter oder Filterkombination und Kombinationen hiervon. Es können aber grundsätzlich alle Strahlungsquellen, die Licht in einem eng begrenzten Wellenlängenbereich zwischen 400 nm und 500 nm emittieren, verwendet werden.

Die Bestrahlungskammer weist bevorzugt transparente Wände auf, wobei sowohl die Strahlungsquelle als auch der Detektor außerhalb der Bestrahlungskammer angeordnet sind. Ebenso ist es möglich, dass Strahlungsquelle und Detektor innerhalb der Bestrahlungskammer angeordnet sind, jedoch muss der Detektor durch einen Filter vor dem Anregungslicht geschützt werden. Die Bestrahlungskammer muss von äußeren Strahlungsquellen abgeschirmt sein, z.B. durch eine Einhausung der gesamten Recycling-Vorrichtung oder eines Bereichs der Recycling-Vorrichtung.

Die mindestens eine Trennvorrichtung ist vorzugsweise ausgewählt aus der Gruppe bestehend aus einer Falltür, einer Auswurfklappe, einer Trennweiche, Ausblasdüsen, Auswerfer anderer Art oder Kombinationen hiervon.

Eine bevorzugte Variante für die Trennung der LEDs von anderen Komponenten nach der Lampenzerkleinerung sieht vor, dass die auf einem Förderband laufenden Komponenten mit blauem Licht einer Wellenlänge zwischen 400 nm und 500 nm angestrahlt werden, wobei das Licht der dabei fluoreszierenden Leuchtstoffschichten der LEDs ortsaufgelöst (bspw. mit einer Zeilenkamera) detektiert wird. Das Signal wird als Trigger zur Auslösung eines entsprechenden Separationsmechanismus (bspw. Ausblasdüsen) genutzt.

Verwendung findet das erfindungsgemäße Verfahren zur Identifizierung und Trennung von Leuchtdioden und/oder Leuchtstofflampen aus einer Altlampenmischung bzw. zur Trennung von Leuchtdioden von Leuchtstofflampen aus einer Altlampenmischung.

Anhand der nachfolgenden Figuren und Beispiele soll das erfindungsgemäße Verfahren näher erläutert werden, ohne dieses auf die hier gezeigten spezifischen Ausführungsformen einschränken zu wollen.
- Fig. 1: zeigt verschiedene Typen von LED-Lampen und eine CFL mit YAG:Ce-Leuchtstoff, die bei den Beispielen eingesetzt wurden
- Fig. 2a: zeigt die Fluoreszenzspektren der in Fig. 1 dargestellten Lampen mit hoher Intensität (unter Anregung mit blauem Licht der Wellenlänge 470 nm)
- Fig. 2b: zeigt die Fluoreszenzspektren der in Fig. 1 dargestellten Lampen mit geringer Intensität (unter Anregung mit blauem Licht der Wellenlänge 470 nm)
- Fig. 3: zeigt anhand einer schematischen Darstellung den Messaufbau zur Ermittlung der Beleuchtungsstärke des durch Anregung mit blauem Licht einer LED bzw. eines blauen Lasers
- Fig. 4: zeigt in einem Diagramm die Beleuchtungsstärke (gemessen unter Anregung mit einem Laser der untersuchten Lampen)
- Fig. 5: zeigt in einem Diagramm die Beleuchtungsstärke (gemessen unter Anregung mit einer blauen LED mit breitem Abstrahlwinkel)
- Fig. 6: zeigt verschiedene erfindungsgemäß eingesetzte Typen von LED-Lampen und CFLs
- Fig. 7: zeigt Röntgen-stimulierte Lumineszenz-Spektren der LED-Lampen und CFLs von Fig. 6

### Beispiele

In einem Versuch wurde jeweils die Fluoreszenz verschiedener LED-Lampen und einer der am Markt seltenen Leuchtstofflampen (CFL für compact fluorescent lamp), die zur Erzeugung von warmweißem Licht einen Anteil Cer-dotiertes Yttrium-Aluminium-Granat (YAG:Ce) enthält, welches sich auch mit blauem Licht anregen lässt. Die Anregung erfolgte mit blauem Licht der Wellenlänge 470 nm.

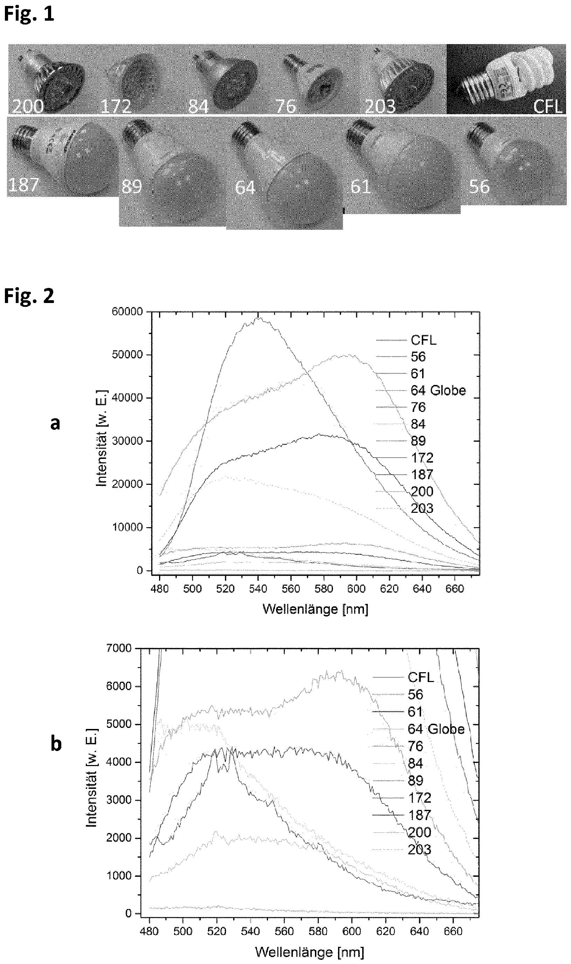

Dabei wurden die Lampen so im Spektrometer platziert, dass die Leuchtstoffschichten möglichst optimal vom Anregungslicht bestrahlt wurden und gleichzeitig eine möglichst gute Detektion des Anregungslichts ermöglicht. Die Lampen wurden so belassen, wie Sie aus der Altlampensammlung entnommen wurden. Daher waren die Leuchtstoffschichten teils sichtbar, teils durch Streuer, flache oder runde Kunststoff- oder Glasmodulen und/oder Optikmodulen abgedeckt und dadurch mehr oder weniger gut erreichbar für das Anregungslicht. Die LED-Lampen 200, 203 und die CFL (s. Fig. 1 oben rechts: Osram Dulux Superstar Micro Twist) zeigen das typische YAG:Ce-Spektrum (Fig. 2). Alle anderen LED-Lampen enthalten mehrere Leuchtstoffe oder modifizierte YAG:Ce-Leuchtstoffe, was an den unterschiedlichen Spektren zu erkennen ist.

Auch wenn nur eine geringe Anzahl CFL mit einer Anregbarkeit im blauen Spektralbereich auf dem Markt sind, macht dieser Umstand eine weitere Unterscheidung zwischen LEDs und Leuchtstofflampen sowie Lampen, die bei der Anregung mit blauem Licht nicht leuchten können, wie Glühlampen und Halogenlampen, notwendig.

Da in Leuchtstofflampen weit mehr als 100-fache Menge an Leuchtstoff verwendet wird, fallen Leuchtstofflampen mit YAG:Ce durch wesentlich höhere Intensitäten des emittierten Lichts bei gleicher Anregung gegenüber LED-Lampen auf. Dies ist dem Spektrum in Fig. 2 zu entnehmen. Die Unterscheidung kann daher dadurch erreicht werden, dass nur Lampen bis zu einem von der Anregungsintensität abhängigen Schwellwert der gemessenen Fluoreszenz-Intensität als LED-Lampe registriert werden. Intensitäten über diesem Schwellwert sind den CFL zuzuordnen.

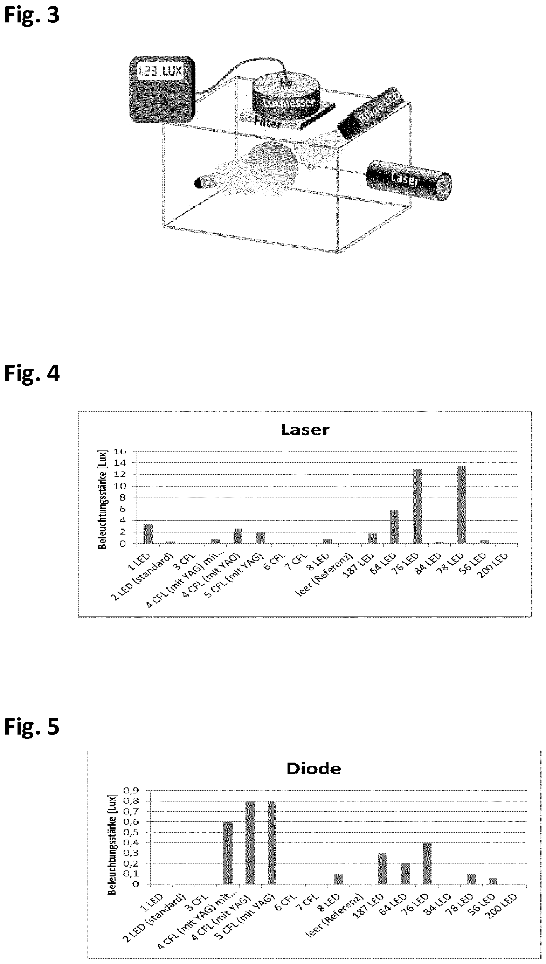

Eine Unterscheidung von CFL und LED über die Intensitätsunterschiede des Fluoreszenzlichts wurde mit einer einfachen Versuchsanordnung getestet. Dabei diente ein geschlossener Kasten als Probenraum. Die darin platzierten Lampen wurden wahlweise mit einem blauen Laser und einer blau emittierenden LED bestrahlt. Dabei wurde mithilfe eines Luxmessers die Beleuchtungsstärke des emittierten Lichts der Lampe gemessen. Um die Detektion des blauen Anregungslichts zu verhindern wurde der Luxmesser mit einem Kantenfilter abgedeckt. (s. Fig. 3)

Die Messungen mit dem Laser zeigen sehr deutlich, dass sich alle LED-Lampen mit dem blauen Licht anregen lassen und dabei Licht emittieren (s. Fig. 4). Dies gilt auch für die beiden getesteten CFLs mit einem YAG:Ce-Anteil. Durch die gezielte Fokussierung auf den Leuchtstoff jeweils einer der verbauten LEDs einer Lampe, fallen die Intensitäten des emittierten Lichts teilweise sehr hoch aus, während die Intensität der CFLs eher mittelmäßig bis gering sind, was auf die gleichmäßige Verteilung des Leuchtstoffs der CFLs auf der Innenseite der Glasröhre zurückzuführen ist. Bei Fokussierung des Lichts auf die Außenseite der Röhre wird nur ein geringer Teil des Leuchtstoffs angeregt.

Daher wurde in einem zweiten Versuch mit einer blauen LED unter weitem Winkel angeregt, sodass eine weitgehend gleichmäßige Anregung der gesamten Lampe möglich war. Bei einigen LED-Lampen lag die emittierte Lichtstärke bei dieser Versuchsanordnung unterhalb der Detektionsgrenze. Dies ist auf die schwache Intensität der Anregungslampe zurückzuführen. Jedoch konnte hier eindeutig gezeigt werden, dass alle LED-Lampen niedrigere Beleuchtungsstärken aufwiesen als die CFLs, was auf die ungleich höheren Mengen an Leuchtstoff, dessen großflächige Verteilung und die gleichmäßige Anregung über die gesamte Lampe zurückzuführen ist.

Bei optimaler homogener Verteilung des Lichts im gesamten Probenraum und wesentlich höheren Anregungsintensitäten lässt sich der Effekt der unterschiedlichen Leuchtstoffmengen auf die unterschiedliche abgestrahlte Emission von CFL und LED noch verstärken. Dies soll durch großflächige Primärbeleuchtung (bspw. durch Dioden-Cluster) und Vollverspiegelung des Messraums realisiert werden. Dadurch ist auch die Lage der zu messenden Lampe gleichgültig.

Bei der Umsetzung im Technikums- oder Industriemaßstab wird eine Serie von Einzelkammern verwendet, um den entsprechenden Durchsatz zu erreichen.

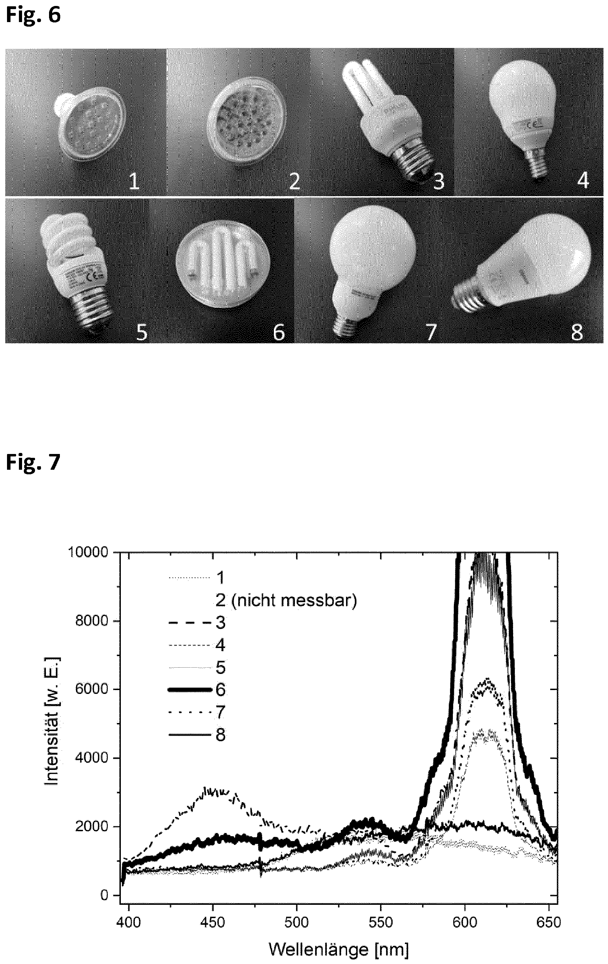

Darüber hinaus besteht die Möglichkeit, eine weitere Sensorik nachzuschalten. Durch hochenergetische Strahlung, insbesondere Röntgenstrahlung, werden die in Leuchtstofflampen und LED-Lampen enthaltenen Leuchtstoffe ebenfalls zum Leuchten angeregt. Im Unterschied zu blauem Licht und UV-Strahlung durchdringt die Röntgenstrahlung Glas und Kunststoff und führt demzufolge in jedem Fall zur Emission von Licht. Dabei wird in LED-Lampen Licht oberhalb von 480 nm emittiert, während aus den Leuchtstoffgemischen der Leuchtstofflampen auch Licht im Blauen bis unterhalb 400 nm und ein hoher Anteil rotes Licht oberhalb 600 nm generiert wird. Die Emission bei Röntgenanregung ist für einige Lampen (s. Fig. 6) in den Spektren in Fig. 7 gezeigt. So wird eine Selektierung von CFLs dadurch möglich, dass man bei Röntgenanregung selektiv die Bereiche oberhalb von 600 nm und unterhalb von 470 nm detektiert.

Die Sensorik funktioniert zusammengefasst folgendermaßen:
In einem 1. Schritt erfolgt eine Messung des Fluoreszenzlichts bei Anregung mit blauem Licht zwischen 400 nm und 500 nm. Die gemessene Intensität dient als Indikator zur Unterscheidung zwischen CFL und LED-Lampe. Die CFL zeigt entweder gar nichts (wenn sie kein YAG enthält) oder gegenüber den LED-Lampen sehr hohe Intensitäten (wenn YAG flächig auf der Innenseite der Röhre aufgetragen ist).

In einem (optionalen) 2. Schritt erfolgt eine Messung des Fluoreszenzlichts bei Anregung mit Röntgenstrahlung, die kann als Sicherheit nach dem ersten Schritt erfolgen kann, aber bei geeigneter Kalibrierung im 1. Schritt nicht erfolgen muss. In diesem Fall wird Licht unterhalb 470 nm und oberhalb 600 nm detektiert. Die dabei gemessenen Intensitäten sind bei für CFLs deutlich höher als bei LEDs, wodurch eine Unterscheidung möglich ist.

Bei der Erkennung der LED-Chips in den Fraktionen zerkleinerter Lampen ist lediglich die Unterscheidung zwischen leuchtenden und nichtleuchtenden Komponenten notwendig. Die Anregung erfolgt ebenfalls mit Licht einer Wellenlänge zwischen 400 nm und 500 nm. LEDs mit einer Leuchtstoffschicht werden dadurch angeregt und emittieren Licht mit Wellenlängen oberhalb des Anregungslichts. Mittels eines Detektors und eines zwischen Probe und Detektor platzierten Kantenfilters, der Licht der Wellenlänge des Anregungslichts absorbiert, werden die LED-Chips identifiziert und können mittels Druckluftdüsen von den anderen Komponenten getrennt werden. Dabei läuft das Material- bzw. Komponentengemisch der zerkleinerten Lampen über ein Laufband. Die einzelnen Teile fallen am Ende des Bandes in unterschiedliche Richtungen, abhängig davon, ob sie vom Strahl der Luftdüsen getroffen werden oder nicht.

## Patentansprüche

1. Verfahren zum Recycling von LED-Komponenten aus einer Altlampenmischung, bei dem
a) eine Altlampenmischung einer Bestrahlungskammer zugeführt wird,
b) die Altlampenmischung mit einer im Wellenlängenbereich von 400 bis 500 nm emittierenden Strahlungsquelle bestrahlt wird, wobei die durch die Bestrahlung zur Fluoreszenz angeregten LED-Lampen Fluoreszenzstrahlung emittieren,
c) die emittierte Fluoreszenzstrahlung mit einem Detektor detektiert wird und so die LED-Lampen identifiziert werden,
d) die identifizierten LED-Lampen von der restlichen Altlampenmischung getrennt werden,
e) die abgetrennten LED-Lampen einer mechanischen Zerkleinerung unterzogen werden,
f) die zerkleinerten LED-Lampen bestehend aus LED-Komponenten und Nicht-LED-Komponenten mit einer im Wellenlängenbereich von 400 bis 500 nm emittierenden Strahlungsquelle bestrahlt werden, wobei die durch die Bestrahlung zur Fluoreszenz angeregten LED-Komponenten Fluoreszenzstrahlung emittieren,
g) die emittierte Fluoreszenzstrahlung mit einem Detektor detektiert wird und so die LED-Komponenten identifiziert werden und
h) die identifizierten LED-Komponenten von den Nicht-LED-Komponenten getrennt werden.

2. Verfahren nach Anspruch 1,
**dadurch gekennzeichnet, dass** die Trennung in Schritt d) durch Falltüren oder Auswurfklappen, Trennweichen, Ausblasdüsen oder Kombinationen hiervon und/oder die Trennung in Schritt h) durch Ausblasdüsen erfolgt.

3. Verfahren nach einem der vorhergehenden Ansprüche,
**dadurch gekennzeichnet, dass** die mechanische Zerkleinerung in Schritt e) durch Schredder, Hammermühle, Prallmühle, Elektrohydraulische Zerkleinerung erfolgt.

4. Verfahren nach einem der vorhergehenden Ansprüche,
**dadurch gekennzeichnet, dass** die Strahlungsquelle ausgewählt ist aus der Gruppe bestehend aus LED-Lampen, LED-Cluster, Laser mit einer Streuoptik, blaue oder weiße Lichtquellen in Kombination mit einem im Bereich 400 nm - 500 nm transparenten Filter oder Filterkombination und Kombinationen hiervon.

5. Verfahren nach einem der vorhergehenden Ansprüche,
**dadurch gekennzeichnet, dass** der Detektor ausgewählt ist aus der Gruppe bestehend aus Photomultiplier, Photodioden, CCD-Sensoren, Luxmeter oder Kombinationen hiervon.

6. Verfahren nach einem der vorhergehenden Ansprüche,
**dadurch gekennzeichnet, dass** die Altlampenmischung zur verbesserten Detektion über Trennwände in kleine Fraktionen aufgeteilt wird und diese Fraktionen jeweils einzeln durch die Messkammer transportiert werden.

7. Verfahren nach einem der vorhergehenden Ansprüche,
**dadurch gekennzeichnet, dass** die Bestrahlungskammer mehrere Strahlungsquellen, insbesondere Strahlungsquellen an allen Seiten der Bestrahlungskammer, und/oder mindestens ein reflektives Element zur homogenen Bestrahlung der Altlampenmischung aufweist.

8. Verfahren nach einem der vorhergehenden Ansprüche,
**dadurch gekennzeichnet, dass** zur Vermeidung der direkten Detektion der von der Strahlungsquelle emittierten Strahlung der Detektor mit einem optischen Filter, insbesondere ein Kantenfilter, geschützt wird.

9. Verfahren nach einem der vorhergehenden Ansprüche,
**dadurch gekennzeichnet, dass** die LED-Komponenten ausgewählt sind aus der Gruppe bestehend aus LED-Chips, LED-bestückte Platinen, Leuchtstoffschichten und Mischungen hiervon.

## Claims

1. A method for recycling LED components from a waste lamp mixture, wherein
a) a waste lamp mixture is fed to an irradiation chamber;
b) the waste lamp mixture is irradiated using a radiation source emitting in the wavelength range of 400 to 500 nm, the LED lamps excited to fluoresce as a result of the irradiation emitting fluorescent radiation;
c) the emitted fluorescent radiation is detected by way of a detector, and the LED lamps are identified thereby;
d) the identified LED lamps are separated from the remaining waste lamp mixture;
e) the separated LED lamps are subjected to mechanical comminution;
f) the comminuted LED lamps comprising LED components and non-LED components are irradiated using a radiation source emitting in the wavelength range of 400 to 500 nm, the LED components excited to fluoresce as a result of the irradiation emitting fluorescent radiation;
g) the emitted fluorescent radiation is detected by way of a detector, and the LED components are identified thereby; and
h) the identified LED components are separated from the non-LED components.

2. The method according to claim 1,
**characterized in that** the separation in step d) takes place by way of trap doors or ejection flaps, separating gates, blow-out nozzles or combinations thereof and/or the separation in step h) takes place by way of blow-out nozzles.

3. The method according to any one of the preceding claims,
**characterized in that** the mechanical comminution in step e) takes place by way of a shredder, a hammer mill, an impact crusher, or electrohydraulic comminution.

4. The method according to any one of the preceding claims,
**characterized in that** the radiation source is selected from the group consisting of LED lamps, LED clusters, lasers including a scattering lens, blue or white light sources in combination with a filter or filter combination transparent in the range of 400 nm to 500 nm, and combinations thereof.

5. The method according to any one of the preceding claims,
**characterized in that** the detector is selected from the group consisting of photomultipliers, photodiodes, CCD sensors, lux meters, or combinations thereof.

6. The method according to any one of the preceding claims,
**characterized in that** the waste lamp mixture is divided into small fractions by way of partitions for improved detection, and these fractions are each individually transported through the measuring chamber.

7. The method according to any one of the preceding claims,
**characterized in that** the irradiation chamber comprises a plurality of radiation sources, in particular radiation sources on all sides of the irradiation chamber, and/or at least one reflective element for homogeneously irradiating the waste lamp mixture.

8. The method according to any one of the preceding claims,
**characterized in that** the detector is protected by an optical filter, and in particular an edge filter, to avoid the direct detection of the radiation emitted by the radiation source.

9. The method according to any one of the preceding claims,
**characterized in that** the LED components are selected from the group consisting of LED chips, circuit boards equipped with LEDs, luminophore layers, and mixtures thereof.

## Revendications

1. Procédé de recyclage de composants LED à partir d'un mélange de lampes usagées, selon lequel
a) un mélange de lampes usagées est amené à une chambre d'irradiation,
b) le mélange de lampes usagées est irradié avec une source de rayonnement émettant dans la plage de longueurs d'onde de 400 à 500 nm, dans lequel les lampes LED excitées en fluorescence par l'irradiation émettent un rayonnement fluorescent,
c) le rayonnement fluorescent émis est détecté avec un détecteur, et les lampes LED sont ainsi identifiées,
d) les lampes LED identifiées sont séparées du reste du mélange de lampes usagées,
e) les lampes LED séparées sont soumises à un broyage mécanique,
f) les lampes LED broyées constituées de composants LED et de composants non LED sont irradiées avec une source de rayonnement émettant dans la plage de longueurs d'onde de 400 à 500 nm, dans lequel les composants LED excités en fluorescence par l'irradiation émettent un rayonnement fluorescent,
g) le rayonnement fluorescent émis est détecté avec un détecteur, et les composants LED sont ainsi identifiés ; et
h) les composants LED identifiés sont séparés des composants non LED.

2. Procédé selon la revendication 1,
**caractérisé en ce que** la séparation à l'étape d) est effectuée par des portes de chute ou des clapets d'éjection, des aiguillages de séparation, des buses de soufflage ou des combinaisons de ceux-ci et/ou la séparation à l'étape h) est effectuée par des buses de soufflage.

3. Procédé selon l'une quelconque des revendications précédentes,
**caractérisé en ce que** le broyage mécanique à l'étape e) est effectué par un broyeur, un broyeur à marteaux, un broyeur à impact, un broyeur électrohydraulique.

4. Procédé selon l'une quelconque des revendications précédentes,
Procédé selon l'une quelconque des revendications précédentes, **caractérisé en ce que** la source de rayonnement est choisie dans le groupe constitué par les lampes LED, les groupes LED, les lasers avec une optique de diffusion, les sources de lumière bleue ou blanche en combinaison avec un filtre transparent dans la plage 400 nm - 500 nm ou une combinaison de filtres et des combinaisons de ceux-ci.

5. Procédé selon l'une quelconque des revendications précédentes,
**caractérisé en ce que** le détecteur est choisi dans le groupe constitué par des photomultiplicateurs, des photodiodes, des capteurs CCD, des luxmètres ou des combinaisons de ceux-ci.

6. Procédé selon l'une quelconque des revendications précédentes,
**caractérisé en ce que** le mélange de lampes usagées est divisé en petites fractions par des parois de séparation pour une meilleure détection et que ces fractions sont transportées chacune individuellement à travers la chambre de mesure.

7. Procédé selon l'une quelconque des revendications précédentes,
**caractérisée en ce que** la chambre d'irradiation comprend plusieurs Sources de rayonnement, en particulier des sources de rayonnement sur tous les côtés de la chambre d'irradiation, et/ou au moins un élément réfléchissant pour l'irradiation homogène du mélange de lampes usagées.

8. Procédé selon l'une quelconque des revendications précédentes,
**caractérisé en ce que**, pour éviter la détection directe du rayonnement émis par la source de rayonnement, le détecteur est protégé par un filtre optique, en particulier un filtre de bord.

9. Procédé selon l'une quelconque des revendications précédentes,
**caractérisé en ce que** les composants LED sont choisis dans le groupe constitué par les puces LED, les platines équipées de LED, les couches de phosphore et leurs mélanges.
